# FASCICULE DE BREVET EUROPEEN

(11) **EP 4 413 793 B1**
(45) Date de publication et mention de la délivrance du brevet: **06.08.2025**
(21) Numéro de dépôt: 22793191.2
(22) Date de dépôt: 23.09.2022
(51) Int. Cl.: H04W 8/04, H04W 60/00, H04W 76/16, H04W 12/12

(54) **PROCÉDÉ, DISPOSITIF ET SYSTÈME D'ENREGISTREMENT D'UN TERMINAL À UN RÉSEAU DE COMMUNICATION**
VERFAHREN, VORRICHTUNG UND SYSTEM ZUR ANMELDUNG EINES ENDGERÄTES IN EINEM KOMMUNIKATIONSNETZ
METHOD, DEVICE AND SYSTEM FOR REGISTERING A TERMINAL TO A COMMUNICATION NETWORK

(30) Priorité: 05.10.2021 FR 2110499
(43) Date de publication de la demande: 14.08.2024
(73) Titulaire: Orange, 92130 Issy-les-Moulineaux (FR)
(72) Inventeur: MOUQUET, Antoine, 92326 Châtillon Cedex (FR); GAMISHEV, Todor, 92326 Châtillon Cedex (FR)
(86) Numéro de dépôt international: PCT/FR2022/051791
(87) Numéro de publication internationale: WO 2023/057701

(56) Documents cités:
- US-A1- 2005 124 341
- US-A1- 2016 150 413
- US-A1- 2019 098 596

## Description

### 1 . Domaine technique

L'invention concerne l'enregistrement d'un terminal à un réseau de communication et plus particulièrement la possibilité pour un terminal de s'enregistrer plusieurs fois et simultanément à un réseau de communication, par exemple à un réseau mère HPLMN (en anglais Home Public Land Mobile Network) en s'attachant de façon simultanée à un ou plusieurs réseaux visités VPLMN (en anglais Visited Public Land Mobile Network), le plus souvent distincts, tout en garantissant la sécurité du réseau et du terminal. Le procédé vise plus particulièrement à autoriser un multiple attachement à un réseau de communication tout en préservant les ressources du réseau.

### 2. Etat de la technique

Selon les techniques connues, un terminal doté d'une carte SIM (en anglais (Subscriber Identity Module) n'est autorisé à s'enregistrer à un réseau de communication qu'une seule fois.

Pour rappel, l'authentification mutuelle entre un réseau de communication de type cellulaire et un équipement utilisateur (terminal) est effectuée au moyen d'un module USIM (en anglais Universal Subscriber Identity Module) contenu dans une carte UICC (en anglais Universal Integrated Circuit Card) communément appelée "carte SIM" insérée dans le terminal et contenant des informations d'authentification (aussi appelées en anglais credentials), consistant, entre autres, en un IMSI (en anglais International Mobile Subscriber Identity) correspondant à un identifiant permanent d'un utilisateur et une clé secrète, qui est également stockée dans un serveur du réseau appelé AuC (en anglais Authentication Center), associé au HLR (en anglais Home Location Register), HSS (en anglais Home Subscriber Server) ou UDM (en anglais Unified Data Management) selon la version du réseau de communication concerné.

Les processus de fabrication et de distribution des USIM, et d'alimentation de l'AuC visent à garantir que les informations d'authentification d'un utilisateur donné demeurent un secret partagé entre un unique USIM et un AuC.

Selon le fonctionnement actuel des réseaux de communication et comme spécifié dans les normes, notamment 2G/3G, 4G et même 5G (3GPP TS 23.501 version 17.0.0 de 03/2021 et TS 23.502 version 17.0.0 de 03/2021), si un terminal parvient à s'authentifier auprès d'un réseau de communication avec le même identifiant IMSI (ou SUPI (en anglais Subscription Permanent Identifier) qu'un terminal déjà enregistré auprès du réseau, alors cela provoquera la terminaison de l'enregistrement du terminal précédemment enregistré avec cet identifiant IMSI (ou SUPI). Ce terminal perd alors la possibilité d'utiliser les services du réseau. Il faut considérer que ce mécanisme de terminaison d'un premier enregistrement peut être souhaité, par exemple lorsqu'un utilisateur insère la carte SIM utilisée dans un premier terminal dans un deuxième terminal sans que le premier terminal n'ait été correctement éteint. Dans ce cas, la terminaison de l'enregistrement du premier terminal est requise et donc valide puisque l'utilisateur utilise le deuxième terminal pour accéder à des services par l'intermédiaire du réseau de communication. C'est le cas également lorsqu'un utilisateur éteint son terminal et un peu plus tard le remet en marche à un autre endroit. Dans ce cas, le nouvel enregistrement peut être reçu par un nouvel AMF alors que l'ancien AMF auquel était connecté précédemment le terminal avait conservé le contexte et n'avait pas géré de fin d'enregistrement pour le terminal. Là aussi, la terminaison du premier enregistrement est souhaitable.

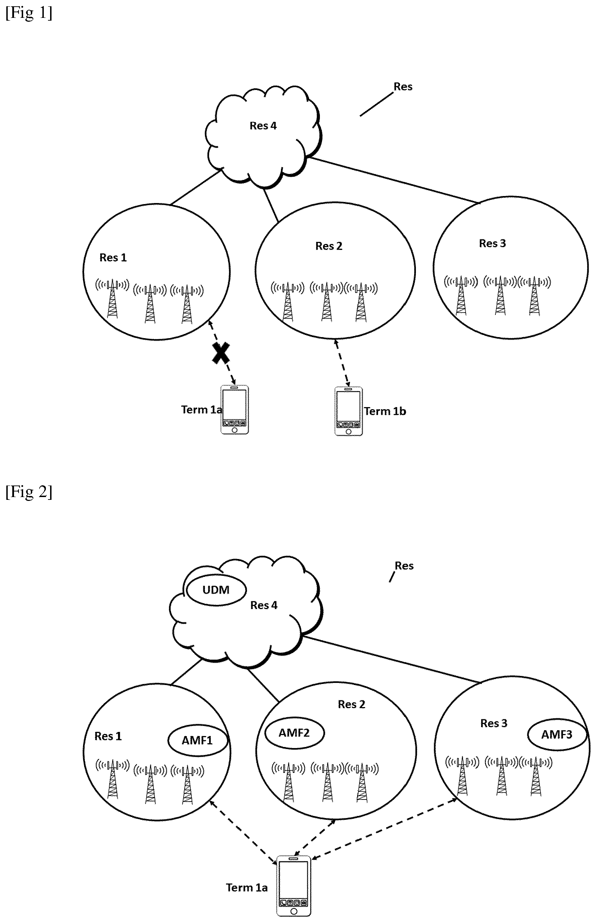

Cependant, cette mise en œuvre peut aussi s'avérer problématique. En effet, en cas de faille dans ces processus d'instanciation du procédé d'authentification, il est possible que les informations d'authentification d'une USIM soient dupliquées et utilisées pour enregistrer un deuxième terminal dans le réseau de communication, par exemple pour réaliser une usurpation d'identité. Le deuxième terminal utilisant ces informations d'authentification usurpées réceptionne alors par exemple un message de validation d'une transaction bancaire destiné au premier terminal, ce qui représente un risque de sécurité important pour le premier terminal dont les données d'authentification ont été usurpées, pour le réseau de communication ainsi que pour les services utilisant ces informations d'authentification. Selon un exemple présenté dans la [Fig 1], un terminal 1a est préalablement enregistré et donc attaché à un réseau Res 1 faisant partie d'un réseau de communication Res. Selon cet exemple, le réseau Res comprend un réseau Res 4 mère et trois réseaux d'accès Res 1, Res 2, Res 3 interconnectés avec le réseau Res 4. Un terminal 1b ayant le même identifiant IMSI ou SUPI s'enregistre auprès du réseau Res 4 par l'intermédiaire du réseau Res 2. Ce nouvel enregistrement du terminal 1b a pour effet de mettre fin à l'enregistrement du terminal 1a auprès du réseau Res 4 par l'intermédiaire du réseau Res 1. Selon un autre exemple, les réseaux Res 1 et Res 2 sont un seul et même réseau. Si les données d'authentification d'une USIM ont été dupliquées, par exemple de façon frauduleuse, du terminal 1a vers le terminal 1b, alors le terminal 1a ne peut plus accéder à ses services de communication.

Lorsque ce type d'usurpation intervient, on parle alors de clonage de carte SIM.

Ce cas de figure pose un double problème puisque le premier terminal, non usurpateur, se voit dans l'impossibilité de continuer à accéder à des services à partir du réseau de communication alors que le deuxième terminal, dit terminal usurpateur, peut quant à lui accéder à des services par l'intermédiaire du réseau de communication et possiblement obtenir des données propres au premier terminal. Ainsi, dans le cas d'un clonage d'USIM, l'utilisateur dont l'USIM a été clonée va alors non seulement être victime d'une usurpation d'identité mais aussi perdre le service du réseau sur son terminal. De plus, il ne se rendra pas compte qu'il est injoignable, puisque l'enregistrement du premier terminal n'est plus valide, tant qu'il n'essaiera pas d'utiliser son terminal.

Par ailleurs, les expressions de besoins de futures architectures de réseaux de communications comprennent notamment la possibilité pour un terminal de s'enregistrer à plusieurs reprises de façon simultanée à un réseau de communication, par exemple en utilisant les ressources de différents réseaux d'accès, y compris d'autres opérateurs. Ces nouvelles exigences ne sont pas satisfaites par le fonctionnement actuel des réseaux cellulaires décrit ci-dessus car elles impliquent plusieurs enregistrements simultanés avec le même identifiant permanent (par exemple l'identifiant SUPI).

La présente invention a pour objet d'apporter des améliorations par rapport à l'état de la techique tel que représenté par exemple par la demande de brevet US2005124341.

### 3. Exposé de l'invention

L'invention vient améliorer la situation à l'aide d'un procédé d'enregistrement d'un terminal à un réseau de communication, le procédé étant mis en œuvre dans une entité de gestion à la suite de la réception d'un message de demande d'enregistrement du terminal audit réseau, l'entité de gestion comprenant au moins un enregistrement précédent dudit terminal audit réseau de communication, ledit procédé comprenant
- une détermination d'un nombre d'enregistrements actifs, parmi l'au moins un enregistrement précédent, en fonction d'au moins un message de réponse reçu en réponse à au moins un message de sollicitation émis comprenant au moins une donnée associée à l'au moins un enregistrement précédent,
- une mise à jour de l'au moins un enregistrement en fonction du message de demande d'enregistrement reçu dans le cas où le nombre d'enregistrements actifs déterminé est inférieur à une valeur maximale d'enregistrements pour ledit terminal.

Le procédé d'enregistrement permet avantageusement de pouvoir s'assurer que des enregistrements précédents du terminal à un réseau de communication sont encore valides et d'autre part de pouvoir autoriser des enregistrements multiples et simultanés pour un même terminal. L'entité de gestion conserve des données relatives à des enregistrements précédents d'un terminal, ces données pouvant être par exemple un identifiant du terminal, un identifiant et/ou une adresse d'un équipement d'un réseau d'accès ayant interagi avec l'équipement de gestion lors d'un enregistrement précédent. L'entité de gestion peut ainsi vérifier lors de la réception d'un message concernant une nouvelle demande d'enregistrement si les enregistrements précédents sont toujours valides, c'est-à-dire si le terminal a maintenu ou non son attachement au réseau de communication conformément aux données des enregistrements précédents. Cette vérification est avantageusement effectuée en transmettant un message, par exemple à destination d'un équipement d'accès ayant transmis la demande d'enregistrement précédente. Dans le cas où un message de réponse, tel qu'un message d'acquittement, est reçu en réponse à ce message de sollicitation, l'entité de gestion peut en déduire que l'enregistrement en question est toujours valide et qu'il convient de le conserver dans les enregistrements actifs et donc en cours du terminal. Cette vérification préalable à l'acceptation ou non de la demande d'attachement, par la mise à jour des données d'enregistrement relatives au terminal, permet notamment de ne pas refuser un nouvel enregistrement alors que le nombre d'enregistrements du terminal semble avoir atteint un nombre maximal d'enregistrements acceptables pour le terminal. L'entité de gestion enregistre en effet un nombre maximal d'enregistrements simultanés autorisés pour le terminal et rejette ainsi toute nouvelle demande d'enregistrement si le terminal est déjà enregistré autant de fois qu'autorisé. Cependant, l'étape de détermination d'enregistrements actifs présente l'avantage de ne considérer que les enregistrements actifs, c'est-à-dire encore valides, et non pas les enregistrements dont les données sont maintenues dans l'entité de gestion mais ne devraient pas l'être, soit parce que le terminal est éteint, soit parce qu'il n'est plus attaché au réseau d'accès par l'intermédiaire duquel il s'est enregistré pour l'enregistrement en question. Le procédé d'enregistrement permet d'autoriser un multiple attachement d'un terminal possiblement par l'intermédiaire de réseaux d'accès distincts tout en ajustant l'allocation de ressources allouées aux enregistrements multiples. En effet, la limitation du nombre d'attachements simultanés par terminal d'une part et d'autre part la vérification que les données d'enregistrements maintenues par l'entité de gestion sont toujours valides, autorisant des libérations de ressources dans les réseaux d'accès et dans l'entité de gestion si un enregistrement n'est plus valide, permettent de préserver les ressources du réseau de communication.

Selon un aspect de l'invention, le procédé d'enregistrement comprend en outre une vérification que le message de demande d'enregistrement reçu a été émis par le terminal correspondant à un terminal pour lequel l'entité de gestion comprend l'au moins un enregistrement précédent.

Une nouvelle demande d'enregistrement peut être émise par un terminal ayant usurpé l'identité d'un autre terminal. Alors que selon les techniques antérieures, la réception d'un nouveau message d'enregistrement aura pour effet que le premier enregistrement ne sera plus valide, le procédé d'enregistrement selon l'invention peut avantageusement comprendre une vérification que les demandes d'enregistrement reçues sont bien émises par le même terminal, de façon à détecter une possible usurpation d'identité et si c'est le cas de ne pas ajouter de nouvel enregistrement voire de mettre en œuvre des techniques d'isolation du terminal ayant possiblement usurpé l'identité du terminal pour lequel l'entité de gestion comprend des données d'enregistrements précédents.

Selon un autre aspect de l'invention, dans le procédé d'enregistrement, la vérification comprend la comparaison d'un identifiant temporaire du terminal reçu dans le message de demande d'enregistrement et un identifiant compris dans l'au moins un enregistrement précédent.

La vérification que le message de demande d'enregistrement a bien été émis par le même terminal que celui correspondant à des données associées à un enregistrement précédent peut être mise en œuvre par la comparaison d'identifiants. Ainsi, un terminal déjà enregistré sur le réseau de communication, reçoit un GUTI ou un 5G-GUTI de la part de l'entité de gestion, lorsqu'il s'enregistre une première fois. Si le même identifiant (par exemple le GUTI) est transmis dans le message de demande d'enregistrement par le terminal, alors l'entité de gestion peut en déduire que le terminal transmettant le message de demande d'enregistrement est bien le terminal que l'entité de gestion a identifié pour les enregistrements précédents. La transmission d'un tel identifiant, propre à un enregistrement précédent, par le terminal permet donc de renforcer la sécurité du procédé, et donc la sécurité du réseau de communication.

Selon un autre aspect de l'invention, dans le procédé d'enregistrement, le message de demande d'enregistrement reçu comprend en outre un nombre maximal d'enregistrements du terminal au réseau de communication.

Le terminal peut avantageusement inclure dans son message de demande d'enregistrement un nombre maximal d'enregistrements du terminal au réseau de communication. Cette information peut être mise à profit pour autoriser ou non le nouvel enregistrement, notamment en fonction du nombre d'enregistrements précédents déjà sauvegardés par l'entité de gestion et ainsi de limiter le nombre d'enregistrements simultanés pour le terminal. Cette information sur le nombre d'enregistrements permet en outre d'éviter des tests et vérifications inutiles, notamment dans le cas particulier où le terminal ne demande pas d'enregistrements multiples.

Selon un autre aspect de l'invention, dans le procédé d'enregistrement, l'au moins un enregistrement précédent est mis à jour seulement si le nombre déterminé auquel est ajouté un enregistrement est inférieur ou égal au nombre d'enregistrements reçus dans le message de demande d'enregistrement.

Dans le cas où le terminal transmet dans le message de demande d'enregistrement un nombre d'enregistrements au réseau de communication pour le terminal, l'entité de gestion peut avantageusement utiliser ce nombre pour autoriser ou non cet enregistrement, et si oui, pour mettre à jour les données associées aux enregistrements. Ainsi, si le nombre d'enregistrements actifs via des réseaux d'accès atteint d'ores et déjà le nombre d'enregistrements indiqué dans le message de demande d'enregistrement, alors l'entité de gestion peut ne pas accepter cette nouvelle demande d'enregistrement et donc de ne pas mettre à jour les données d'enregistrement, puisque ce nouvel enregistrement ne sera pas autorisé. Ce mode de réalisation incite donc le terminal à résilier un des enregistrements actifs s'il souhaite s'enregistrer par l'intermédiaire d'un même ou d'un autre réseau d'accès via le message d'enregistrement transmis.

Selon un autre aspect de l'invention, dans le procédé d'enregistrement, l'au moins un enregistrement précédent est mis à jour dans le cas où le nombre maximal d'enregistrements dans le message de demande d'enregistrement est égal au nombre d'enregistrements compris dans l'au moins un enregistrement précédent.

L'information sur le nombre maximal d'enregistrements présents dans le message de demande d'enregistrement peut être utilisée par l'entité de gestion pour s'assurer qu'il s'agit bien du même terminal qui a transmis les demandes d'enregistrement successives. Ainsi, en sauvegardant dans la donnée associée à chaque enregistrement le nombre maximal d'enregistrements présents dans les différents messages de demande d'enregistrement successifs émis par un terminal, l'entité de gestion peut détecter s'il s'agit du même terminal qui a émis la nouvelle demande d'enregistrement. En effet, si le nombre présent dans les différents messages de demande d'enregistrement n'est pas toujours le même, l'entité de gestion peut en déduire qu'il ne s'agit pas du même terminal qui a émis les différents messages d'enregistrement.

Selon un autre aspect de l'invention, dans le procédé d'enregistrement, l'au moins un enregistrement précédent est mis à jour seulement si un identifiant du réseau d'accès reçu dans le message d'enregistrement est distinct d'un identifiant d'un réseau d'accès compris dans l'au moins un enregistrement précédent.

L'entité de gestion peut avantageusement mémoriser les identifiants de réseaux d'accès (par exemple les identifiants des réseaux VPLMN) par l'intermédiaire desquels le terminal s'est précédemment enregistré. L'entité peut ainsi utiliser cette information mémorisée pour n'autoriser un nouvel enregistrement du terminal que si le terminal ne s'est pas déjà préalablement enregistré via ce réseau d'accès. Selon un autre mode, l'entité de gestion peut autoriser un nombre d'enregistrements à un réseau d'accès supérieur à un mais dans une limite configurable (par exemple 2 ou 3 etc.). Cette information sur l'identifiant du réseau d'accès peut être utilisé en combinaison avec un nombre maximal d'enregistrements simultanés pour enrichir le procédé d'enregistrement.

Selon un autre aspect de l'invention, le procédé d'enregistrement comprend en outre l'enregistrement du terminal dans une tranche du réseau de communication, ladite tranche étant associée à des terminaux ne pouvant pas être à nouveau enregistrés, et/ou la désactivation d'un service de messagerie pour le terminal
- dans le cas où le nombre déterminé auquel est ajouté un enregistrement est supérieur à une valeur maximale d'enregistrements autorisés pour ledit terminal et/ou
- dans le cas où un nombre de réseaux d'accès, par l'intermédiaire desquels le terminal souhaite s'attacher au réseau de communication, compris dans le message de demande d'enregistrement n'est pas identique à un nombre de réseaux d'accès compris dans un message d'enregistrement transmis précédemment par le terminal et/ou,
- dans le cas où le nombre déterminé auquel est ajouté un enregistrement est supérieur à un nombre de réseaux d'accès auprès desquels le terminal souhaite s'attacher.

Plusieurs critères, obligatoires ou optionnels selon le mode de réalisation mis en œuvre, doivent être satisfaits pour qu'un nouvel enregistrement d'un terminal soit ajouté à l'entité de gestion, cette action d'ajout correspondant à la mise à jour de l'au moins une donnée associée à l'au moins un enregistrement précédents. Un ou plusieurs de ces critères peuvent ne pas être satisfaits. Par exemple le terminal peut ne pas être identifié comme identique au terminal pour lequel des enregistrements existent d'ores et déjà dans l'entité de gestion, et/ou le nombre d'enregistrements actifs atteint d'ores et déjà un nombre d'enregistrements autorisé par l'entité de gestion ou un nombre de réseaux d'accès présent dans la nouvelle demande d'attachement. Si un ou plusieurs de ces critères ne sont pas satisfaits, l'entité de gestion peut ne pas ajouter ce nouvel enregistrement et/ou bien il peut l'enregistrer en l'affectant dans une tranche de réseau associée voire spécifique à des terminaux ne pouvant être enregistrés ou à nouveau enregistrés pour un service normal, pour ne pas l'autoriser à accéder à certains services et/ou pour pouvoir localiser ce terminal. Cela permet par exemple de le rediriger vers un service client, par exemple pour détecter le cas où ce nouvel enregistrement provient d'un terminal légitime ou autorisé à accéder au réseau de communication alors que le terminal précédemment enregistré n'était pas légitime pour se faire enregistrer, par exemple parce qu'il a utilisé l'identifiant du terminal légitime.

Les différents aspects du procédé d'enregistrement qui viennent d'être décrits peuvent être mis en œuvre indépendamment les uns des autres ou en combinaison les uns avec les autres.

L'invention concerne également un procédé d'attachement d'un terminal à un réseau de communication, le procédé étant mis en œuvre dans ledit terminal apte à communiquer avec une entité de gestion du réseau de communication, ladite entité de gestion comprenant au moins un enregistrement précédent dudit terminal audit réseau de communication, et comprenant
- une émission à destination de l'entité de gestion d'un message de demande d'enregistrement au réseau de communication,
- une réception en provenance de l'entité de gestion d'au moins un message de sollicitation comprenant une donnée associée à au moins un enregistrement précédent du terminal au réseau de communication,
- une émission à destination de l'entité de gestion d'au moins un message d'acquittement en réponse à l'au moins un message de sollicitation reçu.

Selon un aspect de l'invention, le message de demande d'enregistrement comprend un nombre maximal d'enregistrements du terminal au réseau de communication.

L'invention concerne également un dispositif d'enregistrement d'un terminal à un réseau de communication, le dispositif étant mis en œuvre dans une entité de gestion suite à la réception d'un message de demande d'enregistrement du terminal audit réseau et comprenant au moins un enregistrement précédent du terminal au réseau de communication, ledit dispositif comprenant
- un émetteur, apte à émettre au moins un message de sollicitation comprenant au moins une donnée associée à l'au moins un enregistrement précédent,
- un récepteur, apte à recevoir au moins un message de réponse en réponse à l'au moins un message de sollicitation émis,
- un module de détermination, apte à déterminer un nombre d'enregistrements actifs, parmi l'au moins un enregistrement précédent, en fonction de l'au moins un message de réponse reçu,
- un module de mise à jour de l'au moins un enregistrement précédent en fonction du message de demande d'enregistrement reçu dans le cas où le nombre d'enregistrements actifs déterminé est inférieur à une valeur maximale d'enregistrements pour ledit terminal.

Ce dispositif est apte à mettre en œuvre dans tous ses modes de réalisation le procédé de d'enregistrement qui vient d'être décrit.

L'invention concerne également un dispositif d'attachement configuré pour attacher un terminal à un réseau de communication, mis en œuvre dans le terminal ou une entité d'accès apte à communiquer avec une entité de gestion du réseau de communication, l'entité de gestion comprenant au moins un enregistrement précédent dudit terminal audit réseau de communication, le dispositif d'attachement comprenant
- un émetteur apte à émettre
   - à destination de l'entité de gestion un message de demande d'enregistrement du terminal au réseau de communication,
   - à destination de l'entité de gestion au moins un message de réponse à l'au moins un message de sollicitation reçu,
- un récepteur, apte à recevoir en provenance de l'entité de gestion au moins un message de sollicitation comprenant au moins une donnée associée à au moins un enregistrement précédent du terminal au réseau de communication.

Selon un aspect de l'invention, dans le dispositif d'attachement, le message d'enregistrement émis par l'émetteur comprend un nombre maximal d'enregistrements du terminal au réseau de communication.

Ce dispositif d'attachement est apte à mettre en œuvre dans tous ses modes de réalisation le procédé d'attachement qui a été décrit ci-dessus.

L'invention concerne également un système d'enregistrement d'un terminal à un réseau de communication comprenant une entité de gestion comprenant un dispositif d'enregistrement ainsi qu'un terminal et une entité d'accès, le terminal et/ou l'entité d'accès comprenant un dispositif d'attachement.

L'invention concerne aussi des programmes d'ordinateur comprenant des instructions pour la mise en œuvre des étapes des procédés respectifs d'enregistrement et d'attachement qui viennent d'être décrits, lorsque ces programmes sont l'un et l'autre exécutés par un processeur et un support d'enregistrement lisible respectivement par un dispositif d'enregistrement et d'attachement sur lesquels sont enregistrés les programmes d'ordinateurs.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc.

D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
La [Fig 2] présente une vue simplifiée d'un réseau de communication dans lequel est mis en œuvre le procédé d'enregistrement selon un aspect de l'invention,
La [Fig 3] présente un aperçu du procédé d'enregistrement d'un terminal et du procédé d'attachement d'un terminal selon un mode de réalisation de l'invention,
La [Fig 4] présente un dispositif d'enregistrement d'un terminal à un réseau de communication selon un mode de réalisation de l'invention,
La [Fig 5] présente un dispositif d'attachement d'un terminal à un réseau de communication selon un mode de réalisation de l'invention.

### 5. Description des modes de réalisation

Dans la suite de la description, on présente des modes de réalisation de l'invention dans un réseau de communication. Ce réseau peut être mis en œuvre pour acheminer des données de communication à destination de terminaux fixes ou mobiles et le réseau peut être mis en œuvre à partir d'équipements physiques et/ou des fonctions virtualisées. Ce réseau peut être utilisé pour l'acheminement et/ou le traitement de données de clientèle résidentielle ou d'entreprises.

On se réfère tout d'abord à la [Fig 2] qui présente une vue une vue simplifiée d'un réseau de communication dans lequel est mis en œuvre le procédé d'enregistrement et le procédé d'attachement selon un aspect de l'invention.

Le réseau Res de la [Fig 2] présente la même structure que le réseau Res présenté dans la [Fig 1] décrite ci-dessus. En outre, dans la [Fig 2], le réseau mère Res 4 comprend une entité UDM. Cette entité, qui peut être un équipement physique ou une fonction virtualisée, comprend notamment le profil des abonnés du réseau ainsi que leur droit d'accès et notamment le profil de l'abonné utilisant le terminal 1a. Cette entité UDM peut alternativement être une entité HLR ou une entité HSS. La [Fig 1] comprend en outre, dans chaque réseau visité Res 1, Res 2, Res 3 une entité d'accès qui traite les événements de mobilité et les demandes d'accès au réseau Res 4 par l'intermédiaire des réseaux respectifs Res 1, Res 2 et Res 3 transmises par le terminal 1a. Cette entité d'accès, dénommée AMF1, AMF2 et AMF3 pour les réseaux respectifs Res 1, Res 2 et Res 3, interagit notamment avec l'entité UDM pour récupérer le profil de l'utilisateur du terminal 1a. L'entité d'accès AMF peut également être un équipement de type MME (en anglais Mobility Management Entity) ou tout équipement d'un réseau d'accès apte à recevoir une demande d'enregistrement d'un terminal et à le transmettre directement ou par l'intermédiaire d'une autre entité et/ou d'un autre réseau à une entité de gestion, telle que l'entité UDM. Lorsque le terminal 1a s'attache au réseau visité Res 1 en transmettant une demande d'enregistrement à l'entité AMF1, cette entité AMF1 transmet la demande d'enregistrement à l'entité UDM, possiblement par l'intermédiaire d'autres entités du réseau Res 1 et/ou du réseau Res 4, tel que par exemple une entité AUSF. A la réception de cette demande d'enregistrement du terminal 1a, l'entité UDM détermine dans un premier temps les enregistrements qu'elle a déjà en mémoire pour ce même terminal 1a. Pour cette détermination, l'entité UDM utilise par exemple l'identifiant USIM transmis par le terminal 1a via l'entité AMF1 dans la demande d'enregistrement. Dans le cas où l'entité UDM identifie des enregistrements susceptibles d'être encore valides pour le terminal 1a, elle transmet un message de sollicitation, par exemple à destination de l'entité AMF auprès de laquelle le terminal s'est précédemment enregistré. Selon un exemple, si le terminal 1a s'est précédemment enregistré par l'intermédiaire du réseau Res 2 via l'entité AMF2, alors l'entité UDM transmet un message de sollicitation à destination de l'entité AMF2 dont l'entité UDM a conservé en mémoire l'adresse ou plus globalement un identifiant. Si l'entité AMF2 transmet en retour un message d'acquittement à l'entité UDM, alors celle-ci considère cet enregistrement comme actif. Selon cette alternative, l'entité AMF2, par la mise en œuvre d'un dispositif d'attachement, interagit directement avec l'entité UDM aussi bien pour transmettre la demande d'enregistrement du terminal 1a que pour répondre au message de sollicitation reçu de l'entité UDM. L'entité AMF2 peut, selon un autre exemple, solliciter le terminal 1 pour déterminer si l'enregistrement est actif, c'est-à-dire si le terminal est connecté. Dans ce cas, le terminal, par l'intermédiaire de son dispositif d'attachement, interagit avec l'entité UDM via l'entité AMF2. Selon un autre exemple, le terminal 1a et l'entité AMF2 comprennent tous les deux un dispositif d'attachement du terminal 1a au réseau Res de communication. L'entité UDM effectue cette action de sollicitation pour chacun des enregistrements mémorisés par l'entité UDM pour le terminal 1a. A partir des messages d'acquittement reçus, l'entité UDM est en mesure de déterminer le nombre d'enregistrements actifs pour le terminal 1a lorsqu'il reçoit une nouvelle demande d'enregistrement pour ce terminal 1a. Dans le cas où le nombre d'enregistrements actifs atteint d'ores et déjà un nombre maximal autorisé, alors l'entité UDM refuse cette nouvelle demande d'enregistrement du terminal 1a de façon à limiter le nombre d'enregistrements simultanés pour un même terminal et ainsi limiter l'utilisation des ressources requises pour maintenir ces enregistrements. Dans le cas où ce nombre maximal n'est pas atteint, alors l'entité UDM accepte ce nouvel enregistrement et met à jour le nombre d'enregistrements relatifs au terminal 1a si les autres conditions pour accepter ce nouvel enregistrement (authentification, droit d'accès...) sont respectées.

Selon une alternative, l'entité UDM peut avantageusement vérifier que le message de demande d'enregistrement reçu du terminal par l'intermédiaire de l'entité AMF1 du réseau Res 1 est bien émis par le terminal 1a en vérifiant son identité. Par exemple, l'entité UDM peut comparer l'identifiant du terminal 1a reçu dans la demande d'enregistrement avec un identifiant du terminal 1a compris dans les enregistrements précédents.

Dans le cas où l'entité UDM ne reçoit pas de réponse au message de sollicitation transmis, c'est-à-dire un message d'acquittement en réponse au message de sollicitation émis, alors l'entité UDM peut avantageusement supprimer l'enregistrement correspondant au message de sollicitation émis de façon à ne conserver que les enregistrements actifs parmi les enregistrements précédents et autoriser un nouvel enregistrement par exemple pour le terminal 1a si le nombre d'enregistrements actifs, comprenant l'enregistrement en cours, est inférieur ou égal à une valeur maximale.

La demande d'enregistrement peut avantageusement comprendre un identifiant de l'entité AMF1 ayant transmis la demande d'enregistrement du terminal 1a, par exemple pour que l'entité UDM mémorise cette information dans les enregistrements précédents et puisse utiliser cette information pour transmettre le cas échéant un message de sollicitation si une nouvelle demande d'enregistrement est reçue pour le terminal 1a.

L'entité d'accès AMF1 transmettant la demande d'enregistrement du terminal 1a peut aussi être utilisée pour identifier le réseau d'accès Res 1 par l'intermédiaire duquel est transmise la demande d'enregistrement. L'entité UDM peut mettre à profit cette information sur le réseau d'accès Res 1 pour n'autoriser un nouvel enregistrement du terminal 1a que si les enregistrements précédents du terminal 1a au réseau de communication n'ont pas été effectués par l'intermédiaire du réseau Res 1. Ainsi, l'entité UDM peut limiter le nombre d'enregistrements du terminal 1a mais aussi n'autoriser qu'un nombre d'enregistrements du terminal 1a a un même réseau d'accès, voire interdire un enregistrement multiple du terminal 1a à un même réseau d'accès. Ainsi, selon cette alternative, l'entité UDM pourrait ne pas enregistrer le terminal 1a si un enregistrement précédent du terminal 1a a déjà été effectué par l'intermédiaire du réseau Res 1.

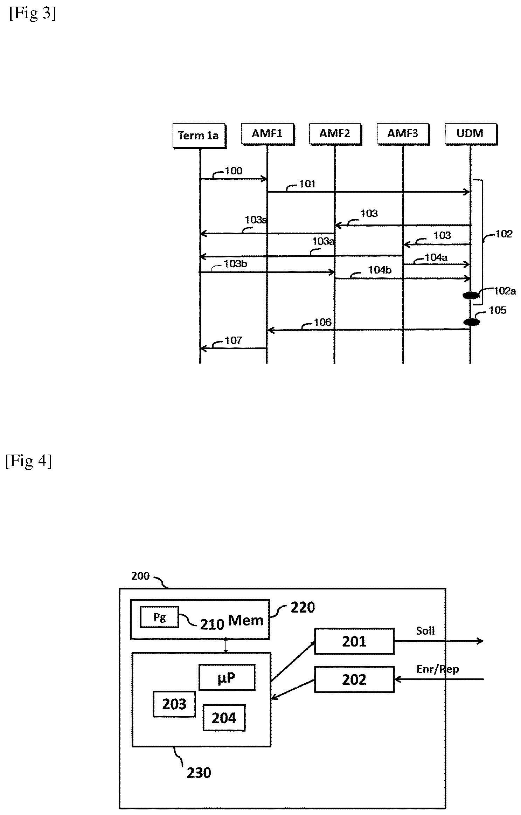

On se réfère tout d'abord à la [Fig 3] qui présente un aperçu du procédé d'enregistrement d'un terminal et du procédé d'attachement d'un terminal selon un mode de réalisation de l'invention.

Les différentes entités présentées dans la [Fig 2] sont également présentes dans la [Fig 3] avec les mêmes dénominations.

Lors d'une étape 100, un terminal 1a, qui peut être indifféremment un smartphone, d'un équipement d'interconnexion, par exemple de type Box, d'un réseau local à un réseau d'opérateur, d'un équipement de type IoT (en anglais Internet of Things), d'une tablette, envoie un message d'enregistrement à un équipement d'accès AMF1 d'un réseau d'accès Res 1. Le réseau d'accès Res 1 peut être un réseau visité, par exemple un réseau VPLMN ou un réseau d'accès d'un réseau mobile, le réseau mobile proposant par exemple une pluralité de réseaux d'accès distincts selon la technologie utilisée (2G, 3G, 4G, 5G, Wi-Fi, xDSL...) ou distincts selon le type de clientèle ou de services du terminal 1a.

Ce message d'enregistrement transmis par le terminal 1a, peut être transmis à l'entité AMF1 via des équipements du réseau Res 1, par exemple des nœuds radio, et selon un exemple, il s'agit d'un message de type registration Request. Selon une alternative, le message d'enregistrement transmis lors de l'étape 100, par l'intermédiaire de l'entité AMF1 comprend en outre un nombre maximal d'enregistrements du terminal 1a au réseau de communications. Ce nombre maximal est configurable dans le terminal 1a et peut être selon un exemple, configuré par un opérateur auprès duquel le terminal a souscrit un abonnement pour s'attacher et donc s'enregistrer au réseau de communications, tel que le réseau Res 4 représenté dans la [Fig 2]. Selon un exemple, le message d'enregistrement comprend en outre un nombre maximal de réseaux d'accès par l'intermédiaire desquels le terminal peut s'enregistrer auprès du réseau de communications. Le message d'enregistrement peut ainsi comprendre une information sur le nombre maximal d'enregistrements autorisés pour le terminal 1a et/ou sur le nombre de réseaux d'accès distincts par l'intermédiaire desquels le terminal peut s'enregistrer auprès du réseau de communication interconnecté avec les différents réseaux d'accès. Cette information ou ces informations présente(s) de façon optionnelle dans le message d'enregistrement peut (ou peuvent) être utilisé(es) par l'entité de gestion UDM en charge d'enregistrer le terminal 1a pour détecter que le terminal ayant transmis cette demande d'enregistrement n'est pas le terminal pour lequel il détient des données d'enregistrements précédents. Cela peut se produire si le terminal 1a, lors d'enregistrements successifs, ne transmet pas les mêmes informations sur le nombre d'enregistrements maximal et/ou le nombre de réseaux d'accès distincts autorisés. Les informations sur le nombre d'enregistrements et/ou sur le nombre de réseaux d'accès peuvent avantageusement être configurés dans la carte UICC (ou carte SIM) du terminal et plus spécifiquement dans le module USIM de la carte UICC. Par la suite, lorsqu'il est indiqué que le terminal émet et reçoit des messages, il faut comprendre qu'il peut s'agir de la carte UICC du terminal qui échange les messages avec les autres entités (AMF, UDM...). Selon une alternative, le terminal 1a transmet dans son message d'enregistrement un identifiant temporaire, tel qu'un identifiant GUTI ou 5G-GUTI, obtenu lors d'un précédent enregistrement, par exemple lors du dernier enregistrement s'étant déroulé parmi les enregistrements précédents, ou lors d'une autre procédure liée au protocole NAS (en anglais Non Access Stratum).

Lors d'une étape 101, l'entité AMF1 transmet le message d'enregistrement, comprenant possiblement les différentes informations optionnelles du message reçu lors de l'étape 100, à destination de l'entité de gestion UDM. L'étape 101 fait généralement suite à une étape d'authentification du terminal 1a au réseau d'accès, cette étape d'authentification n'étant pas représentée sur la [Fig 3]. L'entité de gestion UDM peut être alternativement une entité de type HLR ou HSS ou toute autre entité apte à mémoriser des données d'enregistrement d'un terminal. Selon un exemple, le message d'enregistrement transmis lors de l'étape 101 est un message de type Nudm_UECM_Registration. Selon un exemple, lors de la réception du message d'enregistrement du terminal 1a lors de l'étape 100, l'entité AMF1 alloue dans une étape non représentée sur la [Fig 3] un identifiant temporaire au terminal 1a. Cet identifiant temporaire peut être par exemple un identifiant de type GUTI ou 5G-GUTI. L'entité AMF1 transmet l'identifiant temporaire à l'entité de gestion UDM lors de l'étape 101 dans le même message que le message d'enregistrement ou bien dans un message distinct. Si, dans une alternative, l'entité AMF1 a la capacité de vérifier l'identifiant temporaire reçu du terminal 1a lors de l'étape 100 avec un identifiant temporaire alloué par lui-même ou par une autre entité d'accès AMF2 et/ou AMF3, il peut ne pas transmettre l'identifiant temporaire reçu du terminal 1a à l'entité UDM et vérifier l'identité du terminal 1a par la comparaison des identifiants temporaires.

Lors de la réception du message d'enregistrement, l'entité UDM identifie le terminal 1a à l'origine de la demande d'enregistrement. A cette fin, par exemple de façon alternative ou complémentaire à l'utilisation de l'identifiant temporaire décrit ci-dessus, l'entité UDM utilise l'information de type IMSI ou bien encore de type SUPI, transmise par le l'entité AMF1. Selon un exemple, l'entité AMF1 obtient l'information SUPI du terminal 1a à partir de l'information 5G-GUTI transmise par le terminal 1a, soit à partir d'un identifiant SUCI transmis par le terminal 1a, l'identifiant SUPI pouvant être obtenu par l'entité AMF1 en sollicitant une autre entité, telle qu'une entité de type AUSF ou un autre AMF. Par exemple, lorsqu'il s'agit d'un AMF distinct de l'entité AMF1, lorsque le terminal 1a s'identifie auprès de cet AMF avec un identifiant de type 5G-GUTI, l'AMF obtient l'identifiant de l'entité AMF1 dans l'identifiant 5G-GUTI et l'AMF interroge alors l'entité AMF1 pour obtenir les informations de contexte, comprenant l'identifiant SUPI, à partir de l'identifiant 5G-GUTI. A partir de l'identifiant du terminal 1a, l'entité UDM détermine lors d'une étape 102 si elle a déjà mémorisé des enregistrements pour ce même terminal, en se référant par exemple à une base de données locale à l'entité UDM ou externe à l'entité UDM. Dans le cas où aucun enregistrement est mémorisé et si toutes les autres conditions pour autoriser l'enregistrement du terminal 1a au réseau de communication dont l'entité UDM assure la gestion des enregistrements sont respectées (droits d'accès, clé d'authentification valide...), alors l'entité UDM autorise l'enregistrement du terminal 1a et en informe l'entité AMF1 qui retransmet cette acceptation au terminal 1a dans des étapes non représentées sur la [Fig 3]. Dans le cas où l'entité UDM a mémorisé des enregistrements du terminal 1a, elle détermine si ces enregistrements sont encore actifs ou bien valides, c'est-à-dire si le terminal est toujours connecté au réseau d'accès par l'intermédiaire desquels les demandes d'enregistrement ont été reçues. Il est considéré dans cet exemple, que l'entité UDM détient deux enregistrements précédents pour le terminal 1a et que ces enregistrements ont été respectivement établis par l'intermédiaire des entités AMF2 et AMF3 correspondant aux réseaux d'accès Res 2 et Res 3 présentés en [Fig 2]. L'entité UDM mémorise ainsi les enregistrements successifs du terminal 1a et mémorise pour chaque enregistrement un identifiant du réseau d'accès (Res 2, Res 3) et/ou un identifiant d'une entité du réseau d'accès (AMF2, AMF3) lui permettant de déterminer si les enregistrements mémorisés sont toujours actifs. L'entité UDM par ailleurs peut mémoriser les identifiants temporaires transmis par les AMF (AMF2 et AMF3) ayant préalablement transmis les demandes d'enregistrements du terminal 1a. L'entité UDM peut ainsi utiliser l'identifiant temporaire transmis par le terminal 1a dans le cas où un identifiant temporaire est effectivement transmis par le terminal 1a et le comparer avec les identifiants temporaires mémorisés. Dans le cas où l'identifiant temporaire transmis par le terminal ne correspond pas à un des identifiants temporaires mémorisés, l'entité UDM peut en déduire que le terminal transmettant la demande d'enregistrement usurpe l'identité du terminal 1a et qu'il convient de ne pas accepter l'enregistrement.

Selon une alternative, l'entité UDM compare le nombre maximal d'enregistrements reçus dans le message d'enregistrement via l'entité AMF1 avec les valeurs reçues dans les messages d'enregistrement précédents et peut identifier un problème d'identité du terminal, laissant présager qu'il ne s'agit pas du même terminal, si ces valeurs sont différentes.

Dans le cas où l'entité AMF1 peut analyser l'identifiant temporaire transmis par le terminal 1a, soit parce que le terminal 1a s'est préalablement enregistré via cette même entité d'accès AMF1, soit parce que l'entité AMF1 a connaissance d'un identifiant temporaire transmis par une autre entité d'accès AMF2 et/ou AMF3, alors l'AMF1 peut elle-même vérifier l'identité du terminal 1a. Si l'identité est valide, l'entité AMF1 peut ainsi décider de transmettre la demande d'enregistrement à l'entité UDM. Ainsi, l'entité UDM, ou l'entité AMF1 selon le cas, peut vérifier l'identité du terminal 1a à partir d'un identifiant temporaire, tel qu'un identifiant GUTI ou 5G-GUTI, et/ou à partir d'un identifiant fixe tel qu'un identifiant de type **IMSI** ou SUPI. Si l'un ou/et l'autre des identifiants ne permet pas d'identifier le terminal ayant transmis la demande d'enregistrement comme le terminal 1a, alors le terminal en question ayant probablement usurpé l'identité du terminal 1a peut être affecté dans une tranche de réseau (en anglais network slice) dédiée aux terminaux non reconnus et/ou le service de messagerie (SMS) peut être désactivé pour ce terminal, permettant ainsi de localiser et suivre ce terminal, et de bloquer les services ou de le rediriger vers une page d'information, par exemple en invitant l'utilisateur du terminal en question à contacter le service client de l'opérateur du réseau de communication, au cas où il s'avèrerait que le premier terminal qui s'était enregistré via les entités AMF2 et/ou AMF3 n'était pas le terminal 1a et n'était donc pas légitime à se faire enregistrer lors des précédents enregistrements. S'il a été possible de mener le contrôle optionnel sur l'identité du terminal 1a et si cette identité est vérifiée, l'entité UDM effectue les étapes suivantes.

Lors d'une étape 103, l'entité UDM transmet respectivement aux entités d'accès AMF2 et AMF3 un message de sollicitation. Ce message de sollicitation comprend l'identifiant de l'entité d'accès considérée, à savoir AMF2 et AMF3 ainsi qu'un identifiant du terminal 1a pour lequel l'entité UDM sollicite les entités AMF2 et AMF3. Le message de sollicitation, selon un exemple, correspond à un message de type Namf_Communication_N1 N2MessageTransfer.

Selon cet exemple, il est considéré qu'un enregistrement précédent est actif parmi les deux enregistrements précédents mémorisés par l'entité UDM et qu'il s'agit de l'enregistrement ayant été effectué par l'intermédiaire de l'entité d'accès AMF2.

Lors d'une étape 103a, l'entité AMF2 tente de solliciter le terminal 1a pour déterminer si l'enregistrement de celui-ci peut être considéré comme actif. Il sera considéré comme actif si une réponse est transmise par le terminal 1a à l'entité AMF2, conformément à l'étape 103b. Il est à noter que le terminal 1a est dit inactif pour l'entité AMF2 s'il ne peut plus recevoir les données transmises par l'entité AMF2 et donc s'il ne peut pas répondre aux messages de sollicitation transmis par l'entité AMF2. A l'inverse, si l'enregistrement est actif, le terminal est soit en mode « connecté », soit en mode « veille », et dans les deux cas il est joignable du réseau et peut donc répondre aux messages de sollicitation transmis par l'entité AMF2.

L'entité AMF2, ayant reçu une réponse du terminal 1a lors de l'étape 103b, répond au message de sollicitation reçu lors de l'étape 103 par un message d'acquittement ou un message indiquant que la sollicitation a réussi, envoyé à l'entité UDM lors d'une étape 104b.

Le terminal 1a n'ayant plus d'enregistrement actif par l'intermédiaire de l'entité d'accès AMF3, l'entité ayant par exemple sollicité le terminal 1a lors de l'étape 103a possiblement en transmettant plusieurs messages si aucune réponse n'est reçue du terminal 1a. L'entité AMF3 ne répond pas au message de sollicitation reçu lors de l'étape 103 ou bien répond, lors d'une étape 104a, au message de sollicitation reçu en indiquant à l'entité UDM que la sollicitation a échoué, ce qui a pour conséquence que l'entité UDM considère l'enregistrement du terminal 1a par l'intermédiaire de l'entité d'accès AMF3 comme inactif. Selon une alternative, l'entité UDM peut transmettre plusieurs messages de sollicitation lors de l'étape 103 à l'entité AMF3 en cas de non-réponse de façon notamment à vérifier que la non-réception d'un message d'acquittement n'est pas occasionnée par un problème réseau ou autre ayant momentanément empêché la réception du message de sollicitation par l'entité AMF3. Selon une autre alternative, l'entité AMF3 peut répondre au message de sollicitation reçu par un message de non-acquittement indiquant ainsi à l'entité UDM la bonne réception du message de sollicitation et le caractère non-actif de l'enregistrement du terminal 1a par l'intermédiaire de l'entité AMF3. Selon un autre exemple, l'entité AMF3 ne sollicite pas le terminal 1a pour déterminer si l'enregistrement est actif. L'entité AMF3 peut en effet détenir l'information sur le fait que le terminal 1a n'est plus enregistré et dans ce cas, l'entité AMF3 répond lors de l'étape 104a au message de sollicitation reçu de l'entité UDM lors de l'étape 103 sans solliciter le terminal 1a. Les messages 103 a sont donc optionnels. Selon cet exemple, l'entité AMF3 comprend un dispositif d'attachement du terminal 1a permettant de transmettre à l'entité UDM le message de demande d'enregistrement reçu du terminal 1a, de recevoir le message de sollicitation reçu de l'entité UDM et de répondre à ce message de sollicitation.

En fonction des messages reçus lors des étapes 104a et 104b et d'un nombre maximal autorisé d'enregistrements pour le terminal 1a, l'entité UDM procède à l'enregistrement ou non du terminal par l'intermédiaire de l'entité AMF1. Selon cet exemple, si le nombre maximal d'enregistrements pour le terminal 1a est de deux, alors l'entité UDM procède lors de l'étape 105 à l'enregistrement du terminal 1a d'une part en transmettant lors de l'étape 106 un message de réponse d'accord au terminal 1a par l'intermédiaire de l'entité AMF1 qui retransmet ce message d'accord au terminal 1a lors de l'étape 107. Une fois que le terminal 1a a reçu le message lors de l'étape 107, le terminal 1a est alors enregistré et attaché au réseau de communication par l'intermédiaire du réseau d'accès Res 1 en plus d'être enregistré via l'entité AMF2.

Par ailleurs, lors de l'étape 105, l'entité UDM ajoute l'enregistrement par l'intermédiaire de l'entité AMF1 parmi les enregistrements précédents du terminal 1a, possiblement en mémorisant les différents identifiants fixes et/ou temporaires du terminal 1a, comme décrit ci-dessus, et de l'entité d'accès AMF1. Selon un exemple, l'entité UDM peut en outre mettre à jour les enregistrements précédents en supprimant l'enregistrement du terminal 1a via l'entité AMF3 puisque celui-ci a été déterminé comme non-actif consécutivement à la non-réception d'un message d'acquittement ou la réception d'un message de non-acquittement. La détermination du nombre d'enregistrement actifs par l'envoi d'un ou plusieurs message(s) de sollicitation au terminal 1a (notamment dans le cas où un premier message n'est pas reçu par le terminal 1a à cause d'un problème temporaire de couverture ou de connectivité) peut être utilisé par l'entité UDM pour mettre à jour les données associées aux enregistrements précédents de l'entité de gestion. En effet, en cas de non-réception d'un message d'acquittement par exemple dans un délai à configurer dans l'entité UDM, ou de réception d'un message indiquant que l'enregistrement est non-actif ou que la sollicitation du terminal 1a a échoué, l'entité UDM peut mettre à jour les données d'enregistrement en supprimant la donnée associée à l'enregistrement correspondant à cette non-réception. Cela permet d'une part au terminal 1a de pouvoir possiblement s'enregistrer à nouveau et d'autre part au réseau de libérer des ressources correspondant à l'enregistrement déterminé comme non-actif.

Il est à noter que, selon un exemple, l'entité UDM peut en outre ne pas autoriser l'enregistrement si un enregistrement actif parmi les enregistrements précédents a été effectué par l'intermédiaire de l'entité AMF1 ou par l'intermédiaire de n'importe quelle entité AMF du réseau d'accès Res 1 comprenant l'entité AMF1. Une information, sur le réseau Res 1 et/ou l'entité AMF1 transmise par l'entité AMF1 lors de sa demande d'enregistrement peut par exemple être exploitée par l'entité UDM pour interdire un nouvel enregistrement si le terminal est déjà enregistré à ce même réseau d'accès. De façon alternative, l'entité UDM peut autoriser un nombre spécifique d'enregistrements par l'intermédiaire d'une entité d'accès AMF1 et/ou du réseau d'accès Res 1 comprenant l'entité AMF1.

Dans le cas où le message de demande d'enregistrement reçu lors de l'étape 101 comprend un nombre maximal d'enregistrements pour le terminal 1a, l'entité UDM peut en outre utiliser cette valeur pour autoriser ou non l'enregistrement. L'entité UDM peut utiliser cette valeur pour déterminer le nombre maximal d'enregistrements pour le terminal 1a ou bien utiliser cette valeur en complément de la valeur maximale gérée par l'UDM et/ou du nombre maximal d'enregistrements pour un réseau d'accès donné. Selon un exemple, la valeur la plus faible entre les deux valeurs représente la valeur maximale à ne pas dépasser. Un nombre maximal d'enregistrements pour un réseau d'accès donné peut en outre être utilisé pour autoriser ou non un nouvel enregistrement.

Selon une alternative, si une ou plusieurs conditions indiquées ci-dessus ne sont pas vérifiées, alors le terminal 1a peut être positionné dans une tranche de réseau spécifique et/ou le service de messagerie (SMS) peut être désactivé pour ce terminal, au lieu d'avoir son enregistrement refusé.

On se réfère ensuite à la [Fig 4] qui présente un dispositif 200 d'enregistrement selon un mode de réalisation de l'invention.

Un tel dispositif d'enregistrement peut être mis en œuvre dans une entité de gestion, telle que l'entité UDM présentée dans les [Fig 2] et [Fig 3] ou une entité de type HLR ou HSS. Ce dispositif d'enregistrement peut ainsi être opéré par un opérateur d'un réseau de communication, sur lequel sont acheminées des données de communication relatives à un service numérique, l'entité de gestion pouvant être instancié dans un équipement physique ou sous forme virtualisée.

Par exemple, le dispositif 200 d'enregistrement comprend une unité de traitement 230, équipée par exemple d'un microprocesseur µP, et pilotée par un programme d'ordinateur 210, stocké dans une mémoire 220 et mettant en œuvre le procédé d'enregistrement selon l'invention. A l'initialisation, les instructions de code du programme d'ordinateur 210 sont par exemple chargées dans une mémoire RAM, avant d'être exécutées par le processeur de l'unité de traitement 230. Un tel dispositif 200 d'enregistrement comprend:
- un émetteur, apte à émettre au moins un message Soll de sollicitation comprenant au moins une donnée associée à l'au moins un enregistrement précédent,
- un récepteur 202, apte à recevoir
   - un message Enr de demande d'enregistrement du terminal audit réseau
   - au moins un message Rep de réponse à l'au moins un message de sollicitation émis,
- un module 203 de détermination, apte à déterminer un nombre d'enregistrements actifs, parmi l'au moins un enregistrement précédent, en fonction de l'au moins un message d'acquittement reçu,
- un module 204 de mise à jour de l'au moins un enregistrement précédent en fonction du message de demande d'enregistrement reçu dans le cas où le nombre d'enregistrements actifs déterminé est inférieur à une valeur maximale d'enregistrements pour ledit terminal.

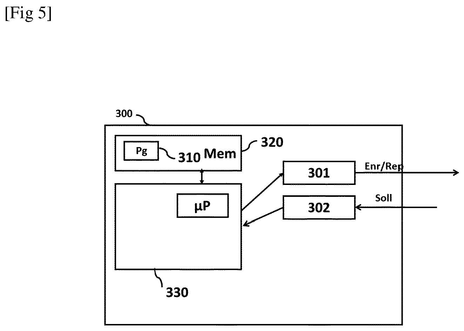

On se réfère ensuite à la [Fig 5] qui présente un dispositif 300 d'attachement selon un mode de réalisation de l'invention.

Un tel dispositif d' attachement peut être mis en œuvre dans un terminal, tel qu'un terminal mobile (smartphone, équipement IoT, tablette, airbox) ou fixe (box), ou bien dans une entité d'accès d'un réseau de communication telle que l'entité AMF présentée notamment dans les [Fig 2] et [Fig 3] ou bien un équipement équivalent d'un réseau de communication (MME par exemple). Ce dispositif d'attachement peut ainsi être opéré par un opérateur d'un réseau de communication ou bien instancié sur un terminal par l'opérateur ou par le client utilisateur du terminal. Le dispositif d'attachement peut être instancié dans un équipement physique ou sous forme virtualisée.

Par exemple, le dispositif 300 d'attachement comprend une unité de traitement 330, équipée par exemple d'un microprocesseur µP, et pilotée par un programme d'ordinateur 310, stocké dans une mémoire 320 et mettant en œuvre le procédé d'attachement selon l'invention. A l'initialisation, les instructions de code du programme d'ordinateur 310 sont par exemple chargées dans une mémoire RAM, avant d'être exécutées par le processeur de l'unité de traitement 330.

Un tel dispositif 300 d'attachement comprend :
- un émetteur apte à émettre
   - à destination de l'entité de gestion (UDM) un message Enr de demande d'enregistrement du terminal (1a) au réseau de communication (Res),
   - à destination de l'entité de gestion au moins un message Rep de réponse à l'au moins un message de sollicitation reçu,
- un récepteur, apte à recevoir en provenance de l'entité de gestion au moins un message Soll de sollicitation comprenant au moins une donnée associée à au moins un enregistrement précédent du terminal au réseau de communication.

## Revendications

1. Procédé d'enregistrement d'un terminal (1a) à un réseau (Res) de communication, le procédé étant mis en œuvre dans une entité de gestion (UDM) suite à la réception (101) d'un message de demande d'enregistrement du terminal (1a) audit réseau (Res), l'entité de gestion (UDM) comprenant au moins un enregistrement précédent dudit terminal (1a) audit réseau (Res) de communication, ledit procédé comprenant
- une détermination (102) d'un nombre d'enregistrements actifs, parmi l'au moins un enregistrement précédent, en fonction d'au moins un message de réponse reçu (104b) en réponse à au moins un message de sollicitation émis (103) comprenant au moins une donnée associée à l'au moins un enregistrement précédent,
- une mise à jour (105) de l'au moins un enregistrement en fonction du message de demande d'enregistrement reçu (101) dans le cas où le nombre d'enregistrements actifs déterminé est inférieur à une valeur maximale d'enregistrements pour ledit terminal (1a).

2. Procédé d'enregistrement, selon la revendication 1, comprenant une vérification que le message de demande d'enregistrement reçu a été émis par le terminal correspondant à un terminal pour lequel l'entité de gestion comprend l'au moins un enregistrement précédent.

3. Procédé d'enregistrement, selon la revendication 2, dans lequel la vérification comprend la comparaison d'un identifiant temporaire du terminal reçu dans le message de demande d'enregistrement et un identifiant compris dans l'au moins un enregistrement précédent.

4. Procédé d'enregistrement, selon l'une des revendications 1 à 3 précédentes, où le message de demande d'enregistrement reçu comprend en outre un nombre maximal d'enregistrements du terminal au réseau de communication.

5. Procédé d'enregistrement, selon la revendication 4, dans lequel l'au moins un enregistrement précédent est mis à jour seulement si le nombre déterminé auquel est ajouté un enregistrement est inférieur ou égal au nombre d'enregistrements reçus dans le message de demande d'enregistrement.

6. Procédé d'enregistrement, selon la revendication 4 ou la revendication 5, dans lequel l'au moins un enregistrement précédent est mis à jour dans le cas où le nombre maximal d'enregistrements dans le message de demande d'enregistrement est égal au nombre d'enregistrements compris dans l'au moins un enregistrement précédent.

7. Procédé d'enregistrement, selon l'une des revendications 1 à 6, dans lequel l'au moins un enregistrement précédent est mis à jour seulement si un identifiant du réseau d'accès (Res 1, AMF1) reçu dans le message d'enregistrement est distinct d'un identifiant (AMF2, AMF3, Res 2, Res 3) d'un réseau d'accès compris dans l'au moins un enregistrement précédent.

8. Procédé d'enregistrement, selon l'une des revendications 1 à 7, comprenant l'enregistrement du terminal (1a) dans une tranche du réseau de communication (Res), ladite tranche étant associée à des terminaux ne pouvant pas être à nouveau enregistrés, ou la désactivation d'un service de messagerie pour le terminal
- dans le cas où le nombre déterminé auquel est ajouté un enregistrement est supérieur à une valeur maximale d'enregistrements autorisés pour ledit terminal et/ou
- dans le cas où un nombre de réseaux d'accès, par l'intermédiaire desquels le terminal souhaite s'attacher au réseau de communication, compris dans le message de demande d'enregistrement n'est pas identique à un nombre de réseaux d'accès compris dans un message d'enregistrement transmis précédemment par le terminal et/ou,
- dans le cas où le nombre déterminé auquel est ajouté un enregistrement est supérieur à un nombre de réseaux d'accès auprès desquels le terminal souhaite s'attacher.

9. Procédé d'attachement d'un terminal à un réseau de communication, le procédé étant mis en œuvre dans ledit terminal (1a) ou dans une entité d'accès (AMF1, AMF2, AMF3) apte à communiquer avec une entité de gestion (UDM) du réseau de communication (Res), ladite entité de gestion (UDM) comprenant au moins un enregistrement précédent dudit terminal audit réseau de communication, et comprenant
- une émission (100) à destination de l'entité de gestion (UDM) d'un message de demande d'enregistrement du terminal (1a) au réseau de communication,
- une réception (103a) en provenance de l'entité de gestion (UDM) d'au moins un message de sollicitation comprenant une donnée associée à au moins un enregistrement précédent du terminal (1a) au réseau (Res) de communication,
- une émission (103b) à destination de l'entité de gestion (UDM) d'au moins un message de réponse à l'au moins un message de sollicitation reçu.

10. Procédé d'attachement, selon la revendication 9, dans lequel le message de demande d'enregistrement comprend un nombre maximal d'enregistrements du terminal (1a) au réseau de communication (Res).

11. Dispositif (200) d'enregistrement d'un terminal (1a) à un réseau de communication (Res), le dispositif étant mis en œuvre dans une entité de gestion (UDM) comprenant au moins un enregistrement précédent du terminal (1a) au réseau de communication (Res), ledit dispositif comprenant
- un émetteur (201), apte à émettre au moins un message Soll de sollicitation comprenant au moins une donnée associée à l'au moins un enregistrement précédent,
- un récepteur (202), apte à recevoir
- un message Enr de demande d'enregistrement du terminal audit réseau
- au moins un message Rep de réponse en réponse à l'au moins un message de sollicitation émis,
- un module (203) de détermination, apte à déterminer un nombre d'enregistrements actifs, parmi l'au moins un enregistrement précédent, en fonction de l'au moins un message de réponse reçu,
- un module (204) de mise à jour de l'au moins un enregistrement précédent en fonction du message de demande d'enregistrement reçu dans le cas où le nombre d'enregistrements actifs déterminé est inférieur à une valeur maximale d'enregistrements pour ledit terminal.

12. Dispositif (300) d'attachement configuré pour attacher un terminal (1a) à un réseau de communication (Res), mis en œuvre dans le terminal (1a) ou une entité d'accès (AMF1, AMF2, AMF3) apte à communiquer avec une entité de gestion (UDM) du réseau de communication (Res), l'entité de gestion (UDM) comprenant au moins un enregistrement précédent dudit terminal (1a) audit réseau de communication (Res), le dispositif (300) d'attachement comprenant
- un émetteur (301) apte à émettre
- à destination de l'entité de gestion (UDM) un message Enr de demande d'enregistrement du terminal (1a) au réseau de communication (Res),
- à destination de l'entité de gestion au moins un message Rep de réponse en réponse à l'au moins un message de sollicitation reçu,
- un récepteur (302), apte à recevoir en provenance de l'entité de gestion (UDM) au moins un message Soll de sollicitation comprenant au moins une donnée associée à au moins un enregistrement précédent du terminal (1a) au réseau de communication (Res).

13. Dispositif (300) d'attachement, selon la revendication 12, dans lequel le message d'enregistrement émis par l'émetteur comprend un nombre maximal d'enregistrements du terminal au réseau de communication.

14. Système d'enregistrement d'un terminal (1a) à un réseau de communication (Res) comprenant
- une entité de gestion (UDM) comprenant un dispositif (200) d'enregistrement selon la revendication 11
- un terminal (1a) et une entité d'accès (AMF1, AMF2, AMF3), le terminal (1a) et/ou l'entité d'accès (AMF1, AMF2, AMF3) comprenant le dispositif (300) d'attachement selon l'une des revendications 12 ou 13.

15. Programme comportant des instructions pour la mise en œuvre du procédé d'enregistrement selon l'une quelconque des revendications 1 à 8, lorsque le programme est exécuté par un processeur.

16. Support d'enregistrement lisible par un dispositif d'enregistrement conforme à la revendication 11, sur lequel est enregistré le programme selon la revendication 15.

## Patentansprüche

1. Verfahren zur Registrierung eines Endgeräts (1a) in einem Kommunikationsnetz (Res), wobei das Verfahren in einer Verwaltungseinheit (UDM) nach dem Empfangen (101) einer Registrierungsanforderungsnachricht für das Endgerät (1a) in dem Netz (Res) durchgeführt wird, wobei die Verwaltungseinheit (UDM) mindestens eine vorhergehende Registrierung des Endgeräts (1a) in dem Kommunikationsnetz (Res) umfasst, wobei das Verfahren umfasst
- ein Ermitteln (102) einer Anzahl von aktiven Registrierungen unter der mindestens einen vorhergehenden Registrierung in Abhängigkeit von mindestens einer Antwortnachricht (104b), die als Antwort auf eine gesendete Anfragenachricht (103) erhalten wird, die mindestens ein der mindestens einen vorhergehenden Anmeldung zugeordnetes Datenelement umfasst,
- ein Aktualisieren (105) der mindestens einen Registrierung in Abhängigkeit von der empfangenen Registrierungsanforderungsnachricht (101) in dem Fall, in dem die ermittelte Anzahl von aktiven Registrierungen geringer als ein maximaler Wert von Registrierungen für das Endgerät (1a) ist.

2. Verfahren zur Registrierung nach Anspruch 1, umfassend eine Überprüfung, dass die empfangene Registrierungsanforderungsnachricht von dem Endgerät gesendet worden ist, das einem Endgerät entspricht, für das die Verwaltungseinheit die mindestens eine vorhergehende Registrierung umfasst.

3. Verfahren zur Registrierung nach Anspruch 2, wobei die Überprüfung das Vergleichen einer in der Registrierungsanforderungsnachricht empfangenen temporären Kennung des Endgeräts und einer in der mindestens einen vorhergehenden Registrierung enthaltenen Kennung umfasst.

4. Verfahren zur Registrierung nach einem der vorhergehenden Ansprüche 1 bis 3, wobei die empfangene Registrierungsanforderungsnachricht ferner eine maximale Anzahl von Registrierungen des Endgeräts in dem Kommunikationsnetz umfasst.

5. Verfahren zur Registrierung nach Anspruch 4, wobei die mindestens eine vorhergehende Registrierung nur aktualisiert wird, wenn die ermittelte Anzahl, zu der eine Registrierung hinzugefügt wird, geringer als oder gleich der in der Registrierungsanforderungsnachricht empfangenen Anzahl von Registrierungen ist.

6. Verfahren zur Registrierung nach Anspruch 4 oder Anspruch 5, wobei die mindestens eine vorhergehende Registrierung in dem Fall aktualisiert wird, in dem die maximale Anzahl von Registrierungen in der Registrierungsanforderungsnachricht gleich der Anzahl von Registrierungen ist, die in der mindestens einen vorhergehenden Registrierung enthalten ist.

7. Verfahren zur Registrierung nach einem der Ansprüche 1 bis 6, wobei die mindestens eine vorhergehende Registrierung nur aktualisiert wird, wenn eine in der Registrierungsnachricht empfangene Kennung des Zugangsnetzes (Res 1, AMF1) verschieden von einer Kennung (AMF2, AMF3, Res 2, Res 3) eines Zugangsnetzes ist, die in der mindestens einen vorhergehenden Registrierung enthalten ist.

8. Verfahren zur Registrierung nach einem der Ansprüche 1 bis 7, umfassend die Registrierung des Endgeräts (1a) in einer Slice des Kommunikationsnetzes (Res), wobei die Slice Endgeräten zugeordnet ist, die nicht erneut registriert werden können, oder die Deaktivierung eines Messaging-Dienstes für das Endgerät
- in dem Fall, in dem die ermittelte Anzahl, zu der eine Registrierung hinzugefügt wird, größer als ein maximaler Wert von Registrierungen ist, der für das Endgerät zulässig ist, und/oder
- in dem Fall, in dem eine Anzahl von Zugangsnetzen, über die sich das Endgerät bei dem Kommunikationsnetz anmelden möchte, die in der Registrierungsanforderungsnachricht enthalten ist, nicht identisch mit einer Anzahl von Zugangsnetzen ist, die in einer von dem Endgerät zuvor übertragenen Registrierungsnachricht enthalten ist, und/oder
- in dem Fall, in dem die ermittelte Anzahl, zu der eine Registrierung hinzugefügt wird, größer als eine Anzahl von Zugangsnetzen ist, bei denen sich das Endgerät anmelden möchte.

9. Verfahren zum Anmelden eines Endgeräts bei einem Kommunikationsnetz, wobei das Verfahren in dem Endgerät (1a) durchgeführt wird oder in einer Zugangseinheit (AMF1, AMF2, AMF3), die geeignet ist, mit einer Verwaltungseinheit (UDM) des Kommunikationsnetzes (Res) zu kommunizieren, wobei die Verwaltungseinheit (UDM) mindestens eine vorhergehende Registrierung des Endgeräts in dem Kommunikationsnetz umfasst, und umfassend
- ein Senden (100), an die Verwaltungseinheit (UDM), einer Registrierungsanforderungsnachricht für das Endgerät (1a) in dem Kommunikationsnetz,
- ein Empfangen (103a), von der Verwaltungseinheit (UDM), mindestens einer Anfragenachricht, die ein mindestens einer vorhergehenden Registrierung des Endgeräts (1a) in dem Kommunikationsnetz (Res) zugeordnetes Datenelement umfasst,
- ein Senden (103b), an die Verwaltungseinheit (UDM), mindestens einer Antwortnachricht auf die mindestens eine empfangene Anfragenachricht.

10. Verfahren zum Anmelden nach Anspruch 9, wobei die Registrierungsanforderungsnachricht eine maximale Anzahl von Registrierungen des Endgeräts (1a) in dem Kommunikationsnetz (Res) umfasst.

11. Vorrichtung (200) zur Registrierung eines Endgeräts (1a) in einem Kommunikationsnetz (Res), wobei die Vorrichtung in einer Verwaltungseinheit (UDM) eingesetzt wird, die mindestens eine vorhergehende Registrierung des Endgeräts (1a) in dem Kommunikationsnetz (Res) umfasst, die Vorrichtung umfassend
- einen Sender (201), der geeignet ist, mindestens eine Anfragenachricht Soll zu senden, die mindestens ein der mindestens einen vorhergehenden Registrierung zugeordnetes Datenelement umfasst,
- einen Empfänger (202), der geeignet ist, zu empfangen
- eine Registrierungsanforderungsnachricht Enr für das Endgerät in dem Netz
- mindestens eine Antwortnachricht Rep als Antwort auf die mindestens eine gesendete Anfragenachricht,
- ein Modul (203) zur Ermittlung, das geeignet ist, eine Anzahl von aktiven Registrierungen unter der mindestens einen vorhergehenden Registrierung in Abhängigkeit von der mindestens einen empfangenen Antwortnachricht zu ermitteln,
- ein Modul (204) zur Aktualisierung der mindestens einen vorhergehenden Registrierung in Abhängigkeit von der empfangenen Registrierungsanforderungsnachricht in dem Fall, in dem die ermittelte Anzahl von aktiven Registrierungen geringer als ein maximaler Wert von Registrierungen für das Endgerät ist.

12. Vorrichtung (300) zur Anmeldung, die dazu ausgestaltet ist, ein Endgerät (1a) bei einem Kommunikationsnetz (Res) anzumelden, und die in dem Endgerät (1a) eingesetzt wird oder in einer Zugangseinheit (AMF1, AMF2, AMF3), die geeignet ist, mit einer Verwaltungseinheit (UDM) des Kommunikationsnetzes (Res) zu kommunizieren, wobei die Verwaltungseinheit (UDM) mindestens eine vorhergehende Registrierung des Endgeräts (1a) in dem Kommunikationsnetz (Res) umfasst, die Vorrichtung (300) zur Anmeldung umfassend
- einen Sender (301), der geeignet ist, zu senden
- an die Verwaltungseinheit (UDM) eine Registrierungsanforderungsnachricht Enr für das Endgerät (1a) in dem Kommunikationsnetz (Res),
- an die Verwaltungseinheit mindestens eine Antwortnachricht Rep als Antwort auf die mindestens eine empfangene Anfragenachricht,
- einen Empfänger (302), der geeignet ist von der Verwaltungseinheit (UDM), mindestens einer Anfragenachricht Soll zu empfangen, die mindestens ein mindestens einer vorhergehenden Registrierung des Endgeräts (1a) in dem Kommunikationsnetz (Res) zugeordnetes Datenelement umfasst.

13. Vorrichtung (300) zur Anmeldung nach Anspruch 12, wobei die von dem Sender gesendete Registrierungsnachricht eine maximale Anzahl von Registrierungen des Endgeräts in dem Kommunikationsnetz umfasst.

14. System zur Registrierung eines Endgeräts (1a) in einem Kommunikationsnetz (Res), umfassend
- eine Verwaltungseinheit (UDM), die eine Vorrichtung (200) zur Registrierung nach Anspruch 11 umfasst
- ein Endgerät (1a) und eine Zugangseinheit (AMF1, AMF2, AMF3), wobei das Endgerät (1a) und/oder die Zugangseinheit (AMF1, AMF2, AMF3) die Vorrichtung (300) zur Anmeldung nach einem der Ansprüche 12 oder 13 umfasst.

15. Programm mit Anweisungen zur Durchführung des Verfahrens zur Registrierung nach einem der Ansprüche 1 bis 8, wenn das Programm von einem Prozessor ausgeführt wird.

16. Speichermedium, das von einer Vorrichtung zur Registrierung nach Anspruch 11 gelesen werden kann und auf dem das Programm nach Anspruch 15 gespeichert ist.

## Claims

1. Method for registering a terminal (1a) with a communication network (Res), the method being implemented in a management entity (UDM) following the receipt (101) of a registration request message requesting registration of the terminal (1a) with said network (Res), the management entity (UDM) comprising at least one previous registration of said terminal (1a) with said communication network (Res), said method comprising
- determining (102) a number of active registrations, from among the at least one previous registration, on the basis of at least one response message received (104b) in response to at least one transmitted solicitation message (103) comprising at least one datum associated with the at least one previous registration,
- updating (105) the at least one registration on the basis of the received registration request message (101) in the event that the determined number of active registrations is less than a maximum value of registrations for said terminal (1a).

2. Registration method according to Claim 1, comprising a check that the received registration request message was transmitted by the terminal corresponding to a terminal for which the management entity comprises the at least one previous registration.

3. Registration method according to Claim 2, wherein the check comprises comparing a temporary identifier of the terminal received in the registration request message and an identifier contained in the at least one previous registration.

4. Registration method according to one of preceding Claims 1 to 3, wherein the received registration request message furthermore comprises a maximum number of registrations of the terminal with the communication network.

5. Registration method according to Claim 4, wherein the at least one previous registration is updated only if the determined number to which a registration is added is less than or equal to the number of registrations received in the registration request message.

6. Registration method according to Claim 4 or Claim 5, wherein the at least one previous registration is updated in the event that the maximum number of registrations in the registration request message is equal to the number of registrations contained in the at least one previous registration.

7. Registration method according to one of Claims 1 to 6, wherein the at least one previous registration is updated only if an identifier of the access network (Res 1, AMF1) received in the registration message is distinct from an identifier (AMF2, AMF3, Res 2, Res 3) of an access network contained in the at least one previous registration.

8. Registration method according to one of Claims 1 to 7, comprising registering the terminal (1a) in a slice of the communication network (Res), said slice being associated with terminals that are not able to be registered again, or deactivating a messaging service for the terminal
- in the event that the determined number to which a registration is added is greater than a maximum value of registrations authorized for said terminal, and/or
- in the event that a number of access networks, by way of which the terminal wishes to attach to the communication network, contained in the registration request message is not identical to a number of access networks contained in a registration message transmitted previously by the terminal, and/or
- in the event that the determined number to which a registration is added is greater than a number of access networks to which the terminal wishes to attach.

9. Method for attaching a terminal to a communication network, the method being implemented in said terminal (1a) or in an access entity (AMF1, AMF2, AMF3) able to communicate with a management entity (UDM) of the communication network (Res), said management entity (UDM) comprising at least one previous registration of said terminal with said communication network, and comprising
- transmitting (100), to the management entity (UDM), a registration request message requesting registration of the terminal (1a) with the communication network,
- receiving (103a), from the management entity (UDM), at least one solicitation message comprising a datum associated with at least one previous registration of the terminal (1a) with the communication network (Res),
- transmitting (103b), to the management entity (UDM), at least one response message to the at least one received solicitation message.

10. Attachment method according to Claim 9, wherein the registration request message comprises a maximum number of registrations of the terminal (1a) with the communication network (Res).

11. Device (200) for registering a terminal (1a) with a communication network (Res), the device being implemented in a management entity (UDM) comprising at least one previous registration of the terminal (1a) with the communication network (Res), said device comprising
- a transmitter (201), able to transmit at least one solicitation message Soll comprising at least one datum associated with the at least one previous registration,
- a receiver (202), able to receive
- a registration request message Enr requesting registration of the terminal with said network,
- at least one response message Rep in response to the at least one transmitted solicitation message,
- a determination module (203), able to determine a number of active registrations, from among the at least one previous registration, on the basis of the at least one received response message,
- a module (204) for updating the at least one previous registration on the basis of the received registration request message in the event that the determined number of active registrations is less than a maximum value of registrations for said terminal.

12. Attachment device (300) configured to attach a terminal (1a) to a communication network (Res), implemented in the terminal (1a) or an access entity (AMF1, AMF2, AMF3) able to communicate with a management entity (UDM) of the communication network (Res), the management entity (UDM) comprising at least one previous registration of said terminal (1a) with said communication network (Res), the attachment device (300) comprising
- a transmitter (301) able to transmit
- to the management entity (UDM), a registration request message Enr requesting registration of the terminal (1a) with the communication network (Res),
- to the management entity, at least one response message Rep in response to the at least one received solicitation message,
- a receiver (302), able to receive, from the management entity (UDM), at least one solicitation message Soll comprising at least one datum associated with at least one previous registration of the terminal (1a) with the communication network (Res).

13. Attachment device (300) according to Claim 12, wherein the registration message transmitted by the transmitter comprises a maximum number of registrations of the terminal with the communication network.

14. System for registering a terminal (1a) with a communication network (Res), comprising
- a management entity (UDM) comprising a registration device (200) according to Claim 11,
- a terminal (1a) and an access entity (AMF1, AMF2, AMF3), the terminal (1a) and/or the access entity (AMF1, AMF2, AMF3) comprising the attachment device (300) according to either of Claims 12 and 13.

15. Program comprising instructions for implementing the registration method according to any one of Claims 1 to 8 when the program is executed by a processor.

16. Recording medium able to be read by a registration device according to Claim 11 and on which the program according to Claim 15 is recorded.
